# FASCICULE DE BREVET EUROPEEN

(11) **EP 0 842 348 B1**
(45) Date de publication et mention de la délivrance du brevet: **12.07.2000**
(21) Numéro de dépôt: 96927725.0
(22) Date de dépôt: 02.08.1996
(51) Int. Cl.: E21B 43/10, E21B 33/127, E21B 29/10, F16L 55/132

(54) **MANCHON TUBULAIRE GONFLABLE POUR TUBER OU OBTURER UN PUITS OU UNE CANALISATION**
AUFBLASBARE, ROHRFÖRMIGE MANSCHETTE ZUM VERROHREN ODER ABDICHTEN EINES BOHRLOCHES ODER EINER LEITUNG
INFLATABLE TUBULAR SLEEVE FOR TUBING OR OBTURATING A WELL OR A PIPE

(30) Priorité: 04.08.1995 FR 9509694
(43) Date de publication de la demande: 20.05.1998
(73) Titulaire: DRILLFLEX, 35230 Châtillon-sur-Seiche (FR)
(72) Inventeur: SALTEL, Jean-Louis, F-35650 Le Rheu (FR)
(74) Mandataire: Le Faou, Daniel
(86) Numéro de dépôt international: FR9601226
(87) Numéro de publication internationale: WO9706346

(56) Documents cités:
- WO-A-91/18180
- WO-A-94/21887
- WO-A-94/25655
- DE-A- 2 728 056
- GB-A- 2 247 263
- US-A- 4 781 249
- US-A- 4 979 570
- US-A- 5 000 261
- US-A- 5 417 289
- US-A- 5 469 919

## Description

La présente invention concerne un manchon tubulaire gonflable, et radialement déformable, servant au tubage ou à l'obturation d'un puits ou d'une canalisation.

Pour le tubage d'un puits de forage pétrolier, ainsi que pour des applications similaires, il a déjà été proposé des préformes tubulaires souples, durcissables in situ ; elles sont destinées à être mises en place à l'état radialement replié ou non expansé - état dans lequel elles possèdent un encombrement radial faible - puis être dépliées et/ou expansées radialement par application d'une pression intérieure, avant d'être durcies in situ, notamment par polymérisation.

Des préformes de ce type sont décrites par exemple dans les documents WO-91/18180, WO-94/21887 et WO-94/25655.

Sous la désignation "radialement déformable" on désignera des manchons pouvant être radialement déployés soit par simple dépliement (comme c'est le cas pour la préforme décrite dans le WO-91/18180 notamment), soit qui peuvent être simplement expansés radialement (sans dépliement), par accroissement de leur diamètre sous l'effet d'une pression interne, soit qui peuvent être successivement dépliés puis mis en expansion (comme c'est le cas pour la matrice et la préforme du document WO-94/25655 notamment).

L'invention a été conçue pour un manchon servant d'outil à dilater une préforme, cet outil étant du même type général que l'outil de dilatation de la préforme - appelé matrice - décrit dans le WO-94/25655 déjà cité ; cette matrice est initialement solidaire de la préforme, à l'intérieur de laquelle elle est montée. Après gonflage de l'ensemble matrice/préforme, et solidification de la préforme, la matrice est arrachée.

Toutefois, l'invention s'applique également à des manchons servant d'outils d'obturation de la paroi d'un puits, pour empêcher des fuites de fluide, cet outil étant désigné couramment dans la profession sous le nom anglais de "packer".

Dans un mode de réalisation possible, le manchon tubulaire objet de l'invention peut également consister dans la préforme elle-même.

Lors de l'opération de déformation radiale (par dépliement et/ou expansion) d'un tel manchon à l'intérieur d'un puits ou d'une canalisation, il y a un risque, si l'expansion de la préforme est non contrôlée, de formation de poches de liquide qui se trouve enfermées entre le manchon et la paroi du puits ou de la canalisation. En effet, dans les applications de forage pétrolier ou analogues, il est courant que le puits ou la canalisation soit remplie d'eau, de boue, ou d'un autre liquide.

On comprend aisément que ceci pose un problème, car le manchon ou la préforme qui l'entoure ne peuvent s'appliquer correctement contre la paroi du puits ou de la canalisation, et le tubage obtenu n'est pas parfaitement cylindrique et n'est pas bien ancré.

Pour des membranes gonflables équipant des outils obturateurs ("packer") on a tenté de pallier cette difficulté en faisant varier la composition du matériau constitutif de la membrane - ou manchon - (à base de caoutchouc synthétique) d'une extrémité à l'autre, de telle manière que sa résistance à l'expansion radiale varie progressivement. Ainsi, lorsqu'on introduit dans l'outil un fluide sous pression, la membrane se dilate progressivement d'une extrémité à l'autre de l'outil, ce qui permet de chasser régulièrement le liquide emprisonné entre la membrane et le puits ou la canalisation, au fur et à mesure de l'opération, vers l'extrémité dont la résistance à l'expansion est la plus forte, extrémité où l'expansion va se faire en dernier (voir par exemple US 4,781,249 A).

Si, dans son principe, cette technique donne satisfaction, elle est délicate et coûteuse à mettre en oeuvre, du fait que la composition du matériau constitutif du manchon n'est pas la même sur l'ensemble du produit. La variation de cette composition est difficile à maîtriser et, surtout, n'est pas applicable à des manchons de grande longueur.

C'est pourquoi, la présente invention a pour objectif de proposer un manchon du genre qui vient d'être mentionné, destiné à servir au tubage d'un puits ou d'une canalisation, notamment pour des applications pétrolières, ce manchon ayant une structure telle que son expansion se fasse également de manière progressive d'une extrémité à l'autre, ceci de façon parfaitement maîtrisée, indépendamment de sa longueur.

Ce résultat est atteint, conformément à l'invention, grâce au fait que la paroi du manchon est munie d'une série de bagues de contention frangibles identiques, et décalées axialement les unes par rapport aux autres, et aptes à se rompre les unes après les autres suivant la direction longitudinale du manchon lorsqu'il est gonflé par un fluide interne sous pression.

Par ailleurs, selon un certain nombre de caractéristiques avantageuses, non limitatives de l'invention :
- les bagues sont régulièrement espacées les unes des autres, d'un écartement constant ;
- le manchon présente un tronçon dépourvu de bague ;
- le manchon présente un tronçon qui est muni de bagues dont le seuil de rupture est sensiblement plus faible que celui des autres bagues ;
- le tronçon dépourvu de bague ou muni de bagues à seuil de rupture plus faible, est une zone d'extrémité du manchon ;
- le tronçon dépourvu de bague, ou muni de bagues à seuil de rupture plus faible, est une zone médiane du manchon ;
- les bagues sont toriques ;
- les bagues sont noyées à l'intérieur de la paroi du manchon ;
- le manchon est formé dans un matériau élastomère synthétique ;
- le manchon constitue un outil servant à dilater une préforme souple et radialement déformable, durcissable in situ pour former le tubage du puits ou de la canalisation ;
- ce manchon est solidaire initialement de la préforme et qu'il est extractible en fin d'opération.
- le manchon constitue un outil d'obturation du puits ou de la canalisation ("packer") ;
- le manchon constitue la préforme souple et radialement déformable, durcissable in situ pour former elle-même le tubage du puits ou de la canalisation, après solidification.

D'autres caractéristiques et avantages de l'invention apparaîtront de la description et des dessins annexés qui en représentent, à simple titre d'exemple, des modes de réalisation non limitatifs.

Sur ces dessins :
- la figure 1 est une vue en coupe longitudinale d'un ensemble constitué par un manchon tubulaire gonflable conforme à l'invention, logé à l'intérieur d'une préforme souple et durcissable in situ ;
- les figures 2 et 3 sont des vues en coupe transversale de la préforme de la figure 1, respectivement avant et après extension radiale ;
- les figures 4 à 8 sont des vues schématiques illustrant différentes étapes du tubage d'un puits à l'aide de l'ensemble représenté aux figures 1 et 2 ;
- les figures 9 et 10 représentent schématiquement des variantes du manchon de la figure 1 (sans la préforme associée).

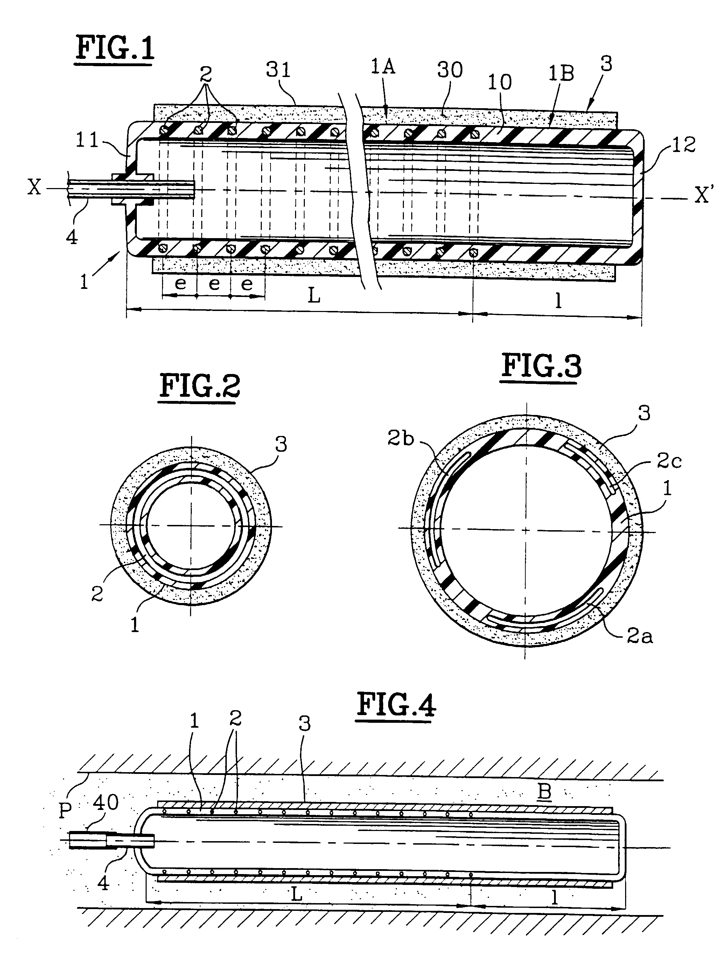

A la figure 1 on a représenté, et désigné sous la référence 1, un outil servant à la dilatation d'une préforme souple, durcissable in situ - à l'intérieur d'un puits ou d'une canalisation - par polymérisation.

Cet outil 1 - ou matrice - consiste en un manchon tubulaire cylindrique, de forme générale allongée, dont la paroi cylindrique est référencée 10. Le manchon est obturé à ces deux extrémités par des cloisons transversales 11, 12, dont l'un - en l'occurrence la cloison 11 - est traversée, de manière étanche, par un embout 4 destiné à être raccordé sur un conduit 40 servant à introduire un fluide sous pression, par exemple de l'eau, à l'intérieur du manchon afin d'en provoquer l'expansion radiale.

Le matériau constitutif du manchon est par exemple un caoutchouc synthétique (élastomère) ou un matériau à base d'élastomère. Ce matériau est le même, et ses caractéristiques mécaniques identiques, sur toute la longueur du manchon ; il est donc possible de le confectionner sur une grande longueur.

Le manchon 1 est inséré à l'intérieur d'une préforme également tubulaire 3, initialement souple, mais durcissable in situ par polymérisation.

La préforme a une paroi constituée d'une résine 30 qui est initialement fluide (malléable), mais est durcissable à chaud par polymérisation. Cette résine est confinée entre une peau extérieure 31, en matériau souple et élastique, et la paroi 10 du manchon, qui fait office de peau intérieure.

L'axe de l'ensemble est référencé **XX'**.

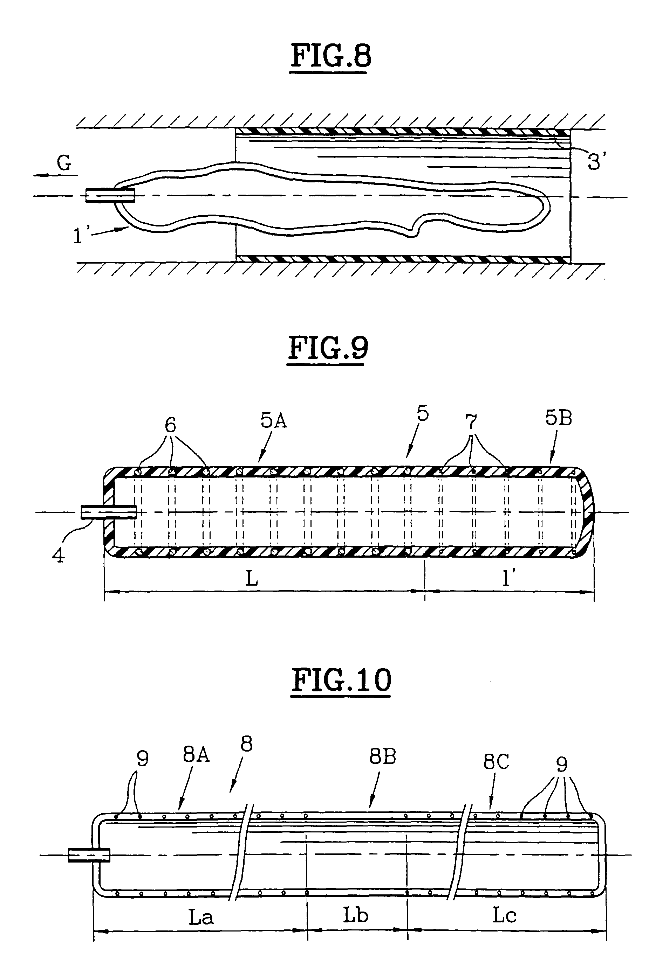

Cet ensemble est du même type général que celui décrit dans le document WO-94/25655 (voir notamment les figures 9 à 12).

Des moyens de liaison provisoires non représentés assurent initialement la solidarisation du manchon 1 avec la préforme 3 qui l'entoure. Ces moyens sont adaptés pour se rompre en fin d'opération (après durcissement de la préforme) ce qui permet alors l'arrachement du manchon intérieur, comme cela sera expliqué plus loin.

Selon une caractéristique essentielle de l'invention, la paroi du manchon 1 est munie d'une série de bagues de contention frangibles qui sont décalées axialement les unes par rapport aux autres et sont aptes à se rompre sous l'effet d'un effort d'extension qui dépasse un seuil déterminé, sous l'effet d'une pression interne visant à les dilater radialement.

Le seuil de rupture de l'ensemble des bagues 2 est sensiblement identique.

Ces bagues sont régulièrement espacées les unes des autres, d'un écartement constant **e**.

Comme on le voit à l'observation de la figure 1, la totalité du manchon 1 n'est pas garnie de bagues. Celles-ci sont prévues seulement sur un tronçon 1A qui correspond à la majeure partie du manchon, de longueur **L**, du côté de l'embout 4 - ou côté amont -.

Par convention, on désignera par côté "amont" le côté du puits qui débouche vers l'extérieur, par lequel arrive le fluide de gonflage, depuis la tête de puits.

Le tronçon situé du côté opposé (aval), de longueur **I** réduite (très sensiblement inférieure à **L**), n'est pas muni de bagues.

De préférence, les bagues 2 sont toriques, c'est-à-dire qu'elles ont une forme circulaire et une section également circulaire, mais ce n'est pas obligatoire.

Chaque bague peut être avantageusement constituée d'un fil, par exemple en plastique ou en métal, enroulé sur lui-même sur plusieurs tours pour former une bague.

De préférence, les bagues sont enduites d'une substance qui favorise son glissement par rapport au matériau élastomère dans lequel elles sont noyées. La substance est par exemple de l'huile de silicone.

Ceci réduit les risques de déchirement de la paroi du manchon lors de la rupture de bagues, et facilite le glissement des bagues sur la paroi 10 du manchon, glissement nécessaire lors de son expansion.

A titre indicatif, non limitatif, on donnera les valeurs dimensionnelles suivantes :
- longueur totale **L + I** du manchon : 20m.
- longueur **L** du tronçon 1A équipée de bagues : 18m.
- longueur **I** du tronçon 1B dépourvu de bagues : 2m.
- distance **e** entre les bagues : 10mm.
- épaisseur (en direction radiale) de la paroi 10 de la matrice : 10mm.
- épaisseur (en direction radiale) de la paroi 30 de la préforme : 10mm.
- diamètre de l'ensemble matrice/préforme avant gonflage (état de la figure 2) : 100mm.
- diamètre de cet ensemble après gonflage (figure 3): 160mm.

La figure 4 représente la phase initiale de tubage d'un puits de forage pétrolier dont la paroi, approximativement cylindrique, est référencée **P**.

Sur les dessins le puits est horizontal ; il peut cependant avoir une direction quelconque, notamment être vertical, l'invention demeurant applicable dans ce cas.

Le diamètre de l'ensemble préforme/matrice est choisi de telle sorte qu'à l'état radialement expansé, la préforme puisse s'appliquer convenablement contre cette paroi **P**, afin de servir au tubage du puits.

L'ensemble matrice/préforme est mis en place, au moyen d'un outillage approprié connu, à partir de l'extérieur du puits, de la gauche vers la droite s'y on se réfère à la figure 4 ; sur cette figure, l'ensemble matrice/préforme se trouve dans la position voulue, en vis-à-vis de la zone de paroi **P** à tuber.

Cet ensemble se trouve immergé à l'intérieur d'un liquide, tel que de la boue, référencé **B** qui est présent dans le puits.

Il est possible, depuis la tête de puits, d'introduire à l'intérieur du manchon 1 un liquide sous pression tel que de l'eau, via le conduit 40 et l'embout 4.

Comme cela est bien connu, ce fluide sous pression va gonfler le manchon 1, et la préforme qui l'entoure, l'ensemble étant dilaté radialement contre la paroi **P**.

En l'absence des bagues 2, cette dilatation se ferait de manière non contrôlée, ce qui risquerait de créer à l'extérieur de l'ensemble matrice/préforme des poches dans lesquels se trouverait emprisonné un certain volume de liquide **B**, contrariant ainsi l'opération de tubage.

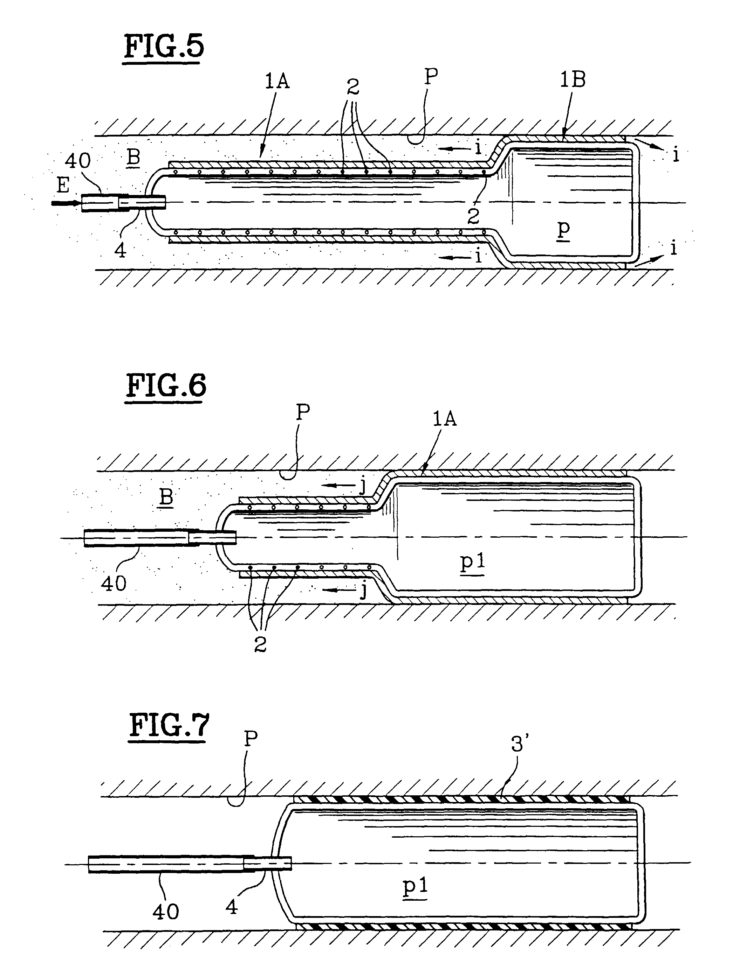

Grâce à l'agencement selon l'invention, sous l'effet de la pression **p** du liquide sous pression introduit dans le manchon (flèche **F** figure 5) la zone aval 1B va s'expanser prioritairement, du fait qu'elle est dépourvue de bagues de contention et possède donc une aptitude à la déformation plus grande que le reste lA du manchon. Cette dilatation s'accompagne d'une diminution de la dimension axiale de cette partie 1B, qui vient s'appliquer par l'intermédiaire du tronçon de préforme que l'entoure contre la paroi **P**. Au cours de cette dilatation, la boue qui se trouvait à l'extérieur de cette zone est chassée à la fois vers l'amont et vers l'aval, comme symbolisé par les flèches **i** à la figure 5.

Le risque de formation de poches autour du tronçon 1B est réduit car cette zone a une longueur **I** limitée.

Si on continue à augmenter la pression du liquide contenu à l'intérieur du manchon, pour le faire passer à une valeur **p**_{**1**} supérieure à **p**, on va provoquer au bout d'un certain temps la rupture de la bague 2 qui est située la plus en aval. En effet, comme cela peut se démontrer aisément par le calcul, c'est cette bague qui est soumise à l'effort d'extension la plus grande. Une fois qu'elle s'est rompue, c'est la bague suivante, côté amont qui va se rompre.

On observe ainsi une rupture progressive de l'ensemble des bagues 2, les unes après les autres, d'aval vers l'amont (de la droite vers la gauche) des figures 5 et 6.

Grâce à cette propagation contrôlée du front d'expansion, le liquide **B** qui se trouve présent entre la préforme et la paroi **P** se trouve refoulé progressivement, également de l'aval vers l'amont, comme cela est symbolisé par les flèches **j**. Ce refoulement évite la formation des poches, dont l'inconvénient a été mentionné plus haut.

Une fois que l'ensemble des bagues s'est rompu, et que la préforme est totalement appliquée contre la paroi **P**, on procède à sa polymérisation par la chaleur ; cette opération peut se faire par exemple en introduisant un liquide chaud à l'intérieur de la matrice et/ou par effet Joule, au moyen de conducteur électrique (fil chauffant) noyé dans la matrice ou dans la préforme

A titre indicatif, les pressions de gonflage **p** et **p**_{**1**} sont respectivement de l'ordre de 5 et 15 bars.

La figure 3 illustre une opération de dilatation au cours de laquelle la bague 2 s'est cassée en trois morceaux 2a, 2b et 2c. Elle pourrait se casser en un seul point ou au contraire en un nombre de morceaux plus grand. Il va de soi que les bagues doivent également être souples de telle manière que leur courbure peut se modifier et suivre celle du manchon après rupture de la bague. Comme déjà dit, les bagues sont avantageusement enduites d'un revêtement facilitant le glissement relatif de la bague - ou des morceaux de bague - par rapport au matériau de la paroi du manchon après rupture de la bague.

Après solidification de la préforme, qui est devenu un tubage rigide 3' (figure 7) la matrice est arrachée, comme cela est symbolisé par la flèche **G** à la figure 8.

Dans le mode de réalisation qui vient d'être décrit, on a considéré que la dilatation de l'ensemble matrice/préforme se faisait uniquement par expansion radiale. Il va de soi que l'invention s'applique également à des ensembles initialement pliés longitudinalement (en forme de "U" ou en forme d'escargot), comme cela est représenté en particulier dans le WO-91/18180 ou dans le WO-94/25655 (figures 6A et 6B).

Le manchon, référencé 5, qui fait l'objet de la variante représentée à la figure 9 comprend un tronçon principal SA de longueur **L** pourvu de bagues 6 analogues aux bagues 2 décrites en références aux figures 1 et 2. Ces bagues présentent toutes sensiblement les mêmes seuils de rupture, relativement élevés.

Le tronçon d'extrémité amont, référencé 5B, est également pourvu d'un ensemble de bagues similaires 7, mais dont le seuil de rupture est sensiblement inférieur à celui des bagues 6. Cependant, ce seuil de rupture n'est pas négligeable.

Le manchon 5 peut donc contenir un fluide de pression non négligeable sans se déformer radialement.

Grâce à cette disposition, il est possible de donner au manchon une certaine rigidité, en y introduisant un fluide sous pression, sans risque de provoquer son expansion. Ceci peut être utile pour l'introduction du manchon dans certains puits ou canalisations notamment non rectilignes, la rigidité du manchon facilitant son guidage.

Une fois que le manchon a été correctement positionné, on va augmenter la pression interne pour provoquer son expansion en deux temps, tout d'abord celle de l'extrémité 5B par rupture progressive des bagues 7, puis - sous une pression encore plus forte - l'expansion progressive de la partie 5A par rupture des bagues 6 successivement.

Le manchon 5 est également associé à une préforme, comme le manchon 1 du mode de réalisation précédent, mais celle-ci n'a pas été représentée à la figure 9 pour ne pas l'alourdir inutilement.

De la même manière, le manchon 8 schématiquement représenté à la figure 10 est associé à une préforme non représentée.

Dans cette variante de manchon, un tronçon médian 8B est dépourvu de bagues de contention, sur une certaine longueur **L**_{**B**}, réduite. En revanche, des bagues 9 similaires aux bagues 2 du premier mode de réalisation sont prévues sur chacun des tronçons d'extrémité 8A et 8C, de grande longueur, sont respectivement référencées **L**_{**A**} et **L**_{**C**}.

Selon cette variante, c'est la zone médiane 8B qui va s'expanser prioritairement et s'appliquer contre la paroi du puits ou de la canalisation, la propagation de l'expansion du manchon se faisant progressivement à partir de cette zone en direction de chacune des deux extrémités du manchon, avec refoulement simultané du liquide contenu dans les puits ou la canalisation vers chacune de ces extrémités.

Bien entendu, la zone médiane 8B pourrait également être munie de bagues similaires aux bagues 7 de la figure 9, et dont le seuil de rupture serait inférieur à celui des bagues 9.

Les bagues de contention qui, conformément à la présente invention, équipent un manchon radialement déformable ne sont pas obligatoirement noyées à l'intérieur de la paroi dudit manchon. Elle pourrait en effet être disposées à l'extérieur de celui-ci.

Le manchon selon l'invention n'est pas obligatoirement un outil servant à dilater une préforme initialement souple, durcissable in situ.

Le manchon selon l'invention peut également servir d'outil obturateur du genre "packer".

Le manchon pourrait constituer la préforme elle-même, les bagues de contention étant par exemple noyées dans la résine polymérisable constitutive de la préforme, entre deux peaux élastiques.

## Revendications

1. Manchon tubulaire gonflable et radialement déformable (1 ; 5 ; 8), pour le tubage ou l'obturation d'un puits (P) ou d'une canalisation, caractérisé par le fait que sa paroi est munie d'une série de bagues de contention frangibles (2 ; 6 ; 9) décalées axialement les unes par rapport aux autres, et aptes à se rompre les unes après les autres suivant la direction longitudinale du manchon lorsqu'il est gonflé par un fluide interne sous pression.

2. Manchon selon la revendication 1, caractérisé par le fait que lesdites bagues (2 ; 6 ; 9) sont régulièrement espacées les unes des autres, d'un écartement constant (e).

3. Manchon selon l'une des revendications 1 ou 2, caractérisé par le fait qu'il présente un tronçon (1B ; 8B) dépourvu de bague.

4. Manchon selon l'une des revendications 1 ou 2, caractérisé par le fait qu'il présente un tronçon (5B) qui est muni de bagues (7) dont le seuil de rupture est sensiblement plus faible que celui des autres bagues (6).

5. Manchon selon la revendication 3 ou 4, caractérisé par le fait que ledit tronçon (1B ; 5B) dépourvu de bague ou muni de bagues (7) à seuil de rupture plus faible, est une zone d'extrémité du manchon.

6. Manchon selon la revendication 3 ou 4, caractérisé par le fait que ledit tronçon (8B) dépourvu de bague, ou muni de bagues à seuil de rupture plus faible, est une zone médiane du manchon.

7. Manchon selon l'une des revendications 1 à 6, caractérisé par le fait que lesdites bagues (2 ; 6, 7 ; 9) sont toriques.

8. Manchon selon l'une des revendications 1 à 7, caractérisé par le fait que lesdites bagues (2 ; 6, 7 ; 9) sont noyées à l'intérieur de sa paroi.

9. Manchon selon l'une des revendications 1 à 8, caractérisé par le fait qu'il est formé dans un matériau élastomère synthétique.

10. Manchon selon l'une des revendications 1 à 9, caractérisé par le fait qu'il constitue un outil servant à dilater une préforme souple et radialement déformable (3), durcissable in situ pour former le tubage (3') du puits (P) ou de la canalisation.

11. Manchon selon la revendication 10, caractérisé par le fait qu'il est solidaire initialement de la préforme (3) et qu'il est extractible en fin d'opération.

12. Manchon selon l'une des revendications 1 à 9, caractérisé par le fait qu'il constitue un outil d'obturation du puits (P) ou de la canalisation.

13. Manchon selon l'une des revendications 1 à 9, caractérisé par le fait qu'elle constitue une préforme souple et radialement déformable (3), durcissable in situ pour former le tubage du puits (P) ou de la canalisation.

## Patentansprüche

1. Aufblasbare, rohrförmige radial verformbare Manschette (1; 5; 8) zum Verbohren oder Abdichten eines Bohrloches (P) oder einer Leitung
**dadurch gekennzeichnet, dass,**
ihre Wand mit einer Reihe von abreißbaren Halteringen (2; 6; 9) versehen ist, die untereinander axial versetzt angeordnet sind und nacheinander in Längsrichtung der Manschette abgerissen werden können, wenn sie mit einem unter Druck stehenden internen Fluid aufgeblasen wird.

2. Manschette nach Anspruch 1,
**dadurch gekennzeichnet, dass**
die Halteringe (2; 6; 9) regelmäßig in einem konstanten Abstand (e) untereinander angeordnet sind.

3. Manschette nach einem der Ansprüche 1 oder 2,
**dadurch gekennzeichnet, dass**
sie einen Abschnitt (1B; 8B) ohne Halteringe aufweist.

4. Manschette nach einem der Ansprüche 1 oder 2,
**dadurch gekennzeichnet, dass**
sie einen Abschnitt (5B) aufweist, der mit Halteringen (7) versehen ist, deren Bruchschwelle deutlich geringer ist, als die Bruchschwelle der anderen Halteringe (6).

5. Manschette nach einem der Ansprüche 3 oder 4,
**dadurch gekennzeichnet, dass**
dieser Abschnitt (1B; 5B), der entweder mit oder ohne Halteringe (7) mit einer niedrigeren Bruchschwelle ausgerüstet ist, einen Endabschnitt der Manschette bildet.

6. Manschette nach einem der Ansprüche 3 oder 4,
**dadurch gekennzeichnet, dass**
dieser Abschnitt (8B), der keine Halteringe aufweist, oder mit Halteringen mit einer geringeren Bruchschwelle ausgerüstet ist, einen Mittelbereich der Manschette bildet.

7. Manschette nach einem der Ansprüche 1 bis 6,
**dadurch gekennzeichnet, dass**
diese Halteringe (2; 6, 7; 9) eine torische Form haben.

8. Manschette nach einem der Ansprüche 1 bis 7,
**dadurch gekennzeichnet, dass**
diese Halteringe (2; 6, 7;9) in den Innenteil ihrer Wand eingebettet sind.

9. Manschette nach einem der Ansprüche 1 bis 8,
**dadurch gekennzeichnet, dass**
sie aus einem synthetischen Elastomer hergestellt ist.

10. Manschette nach einem der Ansprüche 1 bis 9,
**dadurch gekennzeichnet, dass**
sie ein Werkzeug bildet, um ein elastisches und radial verformbares in situ aushärtbares Formteil (3) für die Herstellung der Leitung (3') des Bohrloches (P) oder der Kanalisation zu dehnen.

11. Manschette nach Anspruch 10,
**dadurch gekennzeichnet, dass**
sie am Anfang mit dem Formteil (3) fest verbunden ist und bei Beendigung der Operation herausgezogen werden kann.

12. Manschette nach einem der Ansprüche 1 bis 9,
**dadurch gekennzeichnet, dass**
sie ein Werkzeug für den Verschluss des Bohrloches (P) oder der Kanalisation bildet.

13. Manschette nach einem der Ansprüche 1 bis 9,
**dadurch gekennzeichnet, dass**
sie ein elastisches radial verformbares in situ aushärtbares Formteil (3) bildet, um die Rohrleitung des Bohrloches (P) oder der Kanalisation herzustellen.

## Claims

1. A radially deformable inflatable tubular sleeve (1; 5; 8) for tubing or obturating a well (P) or a pipe characterized in that each wall is provided with a series of breakable restraining rings (2; 6; 9) offset axially relative to each other and adapted to break one after the other in the longitudinal direction of the sleeve when it is inflated by an internal fluid under pressure.

2. A sleeve according to claim 1 characterized in that said rings (2; 6; 9) are regularly spaced at a constant distance e from each other.

3. A sleeve according to claim 1 or claim 2 characterized in that it has a section (1B; 8B) with no rings.

4. A sleeve according to claim 1 or claim 2 characterized in that it has a section (5B) provided with rings (7) having a substantially lower breaking threshold than the other rings (6).

5. A sleeve according to claim 3 or claim 4 characterized in that said section (1B; 5B) with no rings or provided with rings (7) having a lower breaking threshold is an end area of the sleeve.

6. A sleeve according to claim 3 or claim 4 characterized in that said section (8B) with no rings or provided with rings having a lower breaking threshold is a middle area of the sleeve.

7. A sleeve according to any one of claims 1 to 6 characterized in that said rings (2; 6, 7; 9) are toroidal.

8. A sleeve according to any one of claims 1 to 7 characterized in that said rings (2; 6, 7; 9) are embedded inside its wall.

9. A sleeve according to any one of claims 1 to 8 characterized in that it is formed of a synthetic elastomer material.

10. A sleeve according to any one of claims 1 to 9 characterized in that it constitutes a tool for expanding a flexible and radially deformable preform (3) that can be hardened in situ to form the tubing (3') of the well (P) or the pipe.

11. A sleeve according to claim 10 characterized in that it is initially attached to the preform (3) and is extractable at the end of operation.

12. A sleeve according to any one of claims 1 to 9 characterized in that it constitutes a tool for obturating the well (P) or the pipe.

13. A sleeve according to any one of claims 1 to 9 characterized in that it constitutes a flexible and radially deformable preform (3) that can be hardened in situ to form the tubing of the well (P) or the pipe.
